# EUROPEAN PATENT APPLICATION

(11) **EP 0 570 953 A2**
(43) Date of publication of application: **24.11.1993**
(21) Application number: 93108198.8
(22) Date of filing: 19.05.1993
(51) Int. Cl.: A23L 3/22, A23B 7/005, A23L 1/212

(54) **Method and plant for sterilizing and packaging chopped tomato pulp**

(30) Priority: 22.05.1992 IT MI921266
(71) Applicant: CIRIO, BERTOLLI, DE RICA SOCIETA GENERALE DELLE CONSERVE ALIMENTARI SpA, I-80100 Napoli (IT)
(72) Inventor: Giagnetich, Euro, I-55100 Lucca (IT); D'uva, Antonio, I-80078 Pozzuoli (Napoli) (IT); Luongo, Mario, I-80026 Casoria (Napoli) (IT)
(74) Representative: Coloberti, Luigi

(57) **Abstract**

A method and a plant for sterilising and packaging chopped tomato pulp; the tomato pulp (14) is preheated to an enzyme inactivation temperature by mixing (10) with an excess quantity of a conveying food fluid comprising hot tomato sauce (15, 16), after which the mixture of tomato pulp and conveying fluid is superheated (20) to a sterilisation temperature before being fed into an aseptic storage bin (26) from which the mixture is draw and pumped, still in aseptic conditions, along a cooling path at the end of which the conveying fluid is partly drained while the chopped tomato pulp is fed to a packaging station.

## Description

The present invention relates to a method for sterilising and packaging chopped tomato pulp, hereinafter also referred to as "cubed tomato", by means of which it is possible to reduce to a substantial extent possible damages to the cell structures of the tomato, at the same time maintaining aseptic working conditions for the whole product sterilising and packaging process. The invention relates also to a plant or system suitable for actuation of said method.

As is known, tomatoes, immediately after harvesting, must be suitably treated and packaged, or stored in large containers, performing the so-called "cubing" or chopping into pieces, mixing them with a predetermined quantity of a tomato-based sauce and then subjecting them to a process of sterilisation before packaging the product ready for use.

As is known, in a traditional sterilisation and packaging method, chopped tomato is subjected to a number of causes of damage due both to the action of heat on the cell structure of the tomato cube, and to the action of mechanical devices such as pumps, valves etc. forming part of an usual plant, and to the actual pressure exerted by the feeding pump, to which the chopped tomato must necessarily be subjected to allow the forward movement along the conduits of the packaging system.

In the past, in order to reduce damage to the tomato cubes, various chemical or technical remedial actions were introduced, with the aim of reinforcing the cell structure of the tomato, or to exert a "protective" action by preventing its accumulation and consequent damage through squashing along the sterilisation system. This was achieved for example by carrying out an acidification phase of the tomato by adding suitable food acidulants to bring the pH of the tomato to a value equal to or lower than 4,2. Nevertheless, although a greater degree of acidification of the tomato confers a greater microbiological stability, enabling treatment times and temperature to be reduced, with consequently less probability of damage, it also creates a product whose taste is strongly affected by the presence of the acidulant used, with the consequently highly acid taste, little appreciated by the consumer.

It has likewise been proposed to add adjuvants, for example treating the tomato with a calcium chloride based substance, to maintain the consistency of the cell structure of the tomato, and which confer a turgid and dense appearance to the cubes of tomato; however this system also causes undesirable tastes and has a negative effect on the colour of the product, consequently reducing its appreciation and its commercial value.

Attempts have also been made to intervene with technical remedies to reduce the damaging effects of the feeding thrust along a sterilisation plant or system, treating the tomato cube with considerable quantities of a conveying fluid, for food uses, for example tomato sauce, to the amount of approximately 50% in weight of the mixed product.

Although the conveying fluid, more particularly tomato sauce, brings about a "protective" action on the cubes of tomato, in that it prevents them from accumulating and subsequently from being damaged through squashing, caused by the strong difference in pressure necessary for making the product flow along the sterilisation and cooling sections of a traditional system, it nevertheless gives rise to a finished product with considerable quantities of sauces, in practice removing the properties of true tomato "cubes"; the resulting product therefore presents the characteristic of a mixed product, less prized and less appealing. Moreover the high pumping pressure required is again the cause of possible damages to the cubes tomato. Therefore, at the end of the sterilisation system, and before packaging, the excess conveying liquid has to be drained. Independently thereof, the use of large quantities of conveying liquid or of tomato sauce, needed to convey the cubed tomato along the sterilisation system, entails excessively long paths in the heat exchangers with consequently damage due to the prolonged action of the heat on the cell structures of the tomato, combined with the high pressure value which has to be exerted to move the tomato forward along the same sterilisation system.

The present invention relates to a method and system or plant for the treatment of cubes of tomato, by means of which physical and mechanical remedial techniques have been applied to reduce to the utmost the causes of damage to the cubed tomato, which in this way can maintain its chemical, physical and organoleptic properties substantially unaltered, without adding any acidulant or adjuvant substance, normally required according to traditional techniques.

A further object of the invention is to provide a method and system for sterilising and packaging cubed tomato, as referred previously, by means of which the cubed tomato is subjected to less intensive thermal cycles of heating and cooling, with the aim of reducing the times of thermal stress on the product, maintaining its properties to a greater extent.

Yet a further object of the present invention is to provide a system for sterilisation and packaging of cubed tomato in a continuous process, wherein the product is subjected to lesser mechanical actions and lower pressures, maintaining constantly aseptic conditions along the treatment system.

The above has been made possible by carrying out a phase of enzyme inhibition on the cubed tomato, by means of a preheating achieved with the same liquid used for conveying the cubed tomato, also performing a differentiated pumping action, in fully aseptic conditions, along the sterilisation system, according to the features of the main claims 1 and 10.

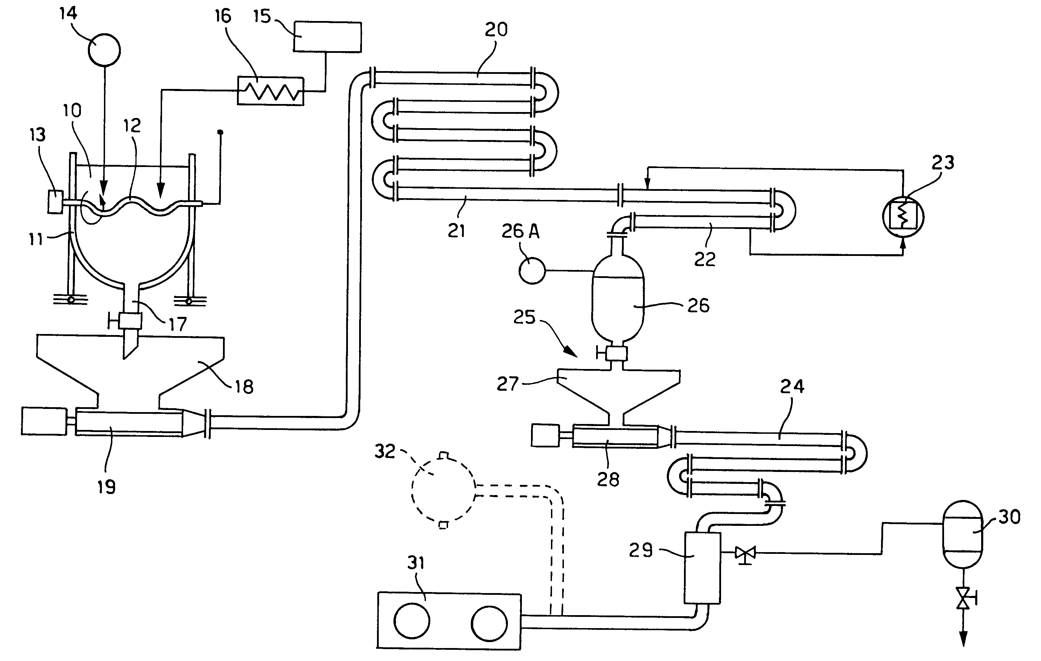

The method and the system according to the present invention will be illustrated in greater detail hereinunder, with reference to the diagram in the accompanying drawing.

In said figure reference 10 denotes a loading container, provided with a jacket or peripheral cavity wall 11 in which a heating fluid, for example superheated water, is constantly made to circulate to maintain it at a predetermined temperature.

Inside the container 10 a mixing coil 12 rotates, driven by a motor 13. The coil 12 is also maintained at an appropriate temperature by the circulation of superheated water or of another heating fluid.

The chopped tomato is loaded into the container 10 by drawing it from a suitable storage container 14, in addition to an over quantity of a conveying fluid, of a food nature, for example tomato sauce drawn from a storage tank 15. Before being fed into the container 10, the sauce is appropriately heated, for example to a temperature of between 85 and 95°C in a heat exchanger 16 in order to carry out a preheating phase on the cubed tomato while it is mixed with the hot sauce or with the conveying liquid in the container 10. The tomato sauce fed in excess, for example in a quantity of between 40-60% in weight of the cubed tomato, substantially performs two main functions in the process of sterilisation and packaging of the cubed tomato: a first heat supplying function to preheat the cubed tomato to a temperature equal to or around that of enzyme inhibition, and a second conveying function for pumping the cubes which in this way are damaged less.

The container 10 for the mixture of cubed tomato and conveying fluid, via a short conduit 17, discharges into the hopper 18 of a first pumping means 19 which feeds the mixture of cubed tomato and conveying fluid, along a path of the system, towards a first heat exchanger 20.

To preheat the cubed tomato, both by means of the sauce or conveying fluid, and by means of the heat released by the mixing container 10, it is necessary that temperatures and weight percentages of the two components, must be such as to bring the cubed tomato to an enzyme inactivation temperature, for example to a temperature of between 40 and 60°C, in order to eliminate the undesirable phenomena of serum separation normally present and the consequent enzyme reaction on the chopped tomato cube, before sterilisation.

Preheating of the cubed tomato mixture by the conveying fluid inside the mixing container allows further advantages in the subsequent sterilisation phase which in this way can take place with a more favourable heat balance. In fact, since the cubed tomato mass mixed with the conveying fluid is already at a sufficiently high temperature, around 40-60°C, in order to bring this mass to a sterilisation temperature, for example 115-118°C, a smaller heat exchange surface is required and hence a smaller length of the exchanger 20. The reduction in the length of the heat exchanger 20 can be estimated at around 40-50% compared to a traditional system. In this way considerable advantages of cost and operation are achieved for the whole system.

At the outlet of the heat exchanger 20 for sterilisation, a thermal dwell section 21 may be provided in which the product remains at a constant temperature for the time required to complete the sterilisation process. The mixture of cubed tomato and conveying fluid is then moved forwards along a precooling section 22 where, by the circulation of icy water supplied by a refrigerator 23, for example at a temperature of between 0 and 5°C, rapid cooling is performed to a temperature lower than 100°C, for example to a temperature of between 80-90°C, before carrying out a final cooling phase, to bring the product for example to a temperature of 35°C, in a second cooling section 24 located downstream of the previous one. In this second cooling section 24, cooling of product may again take place with icy water as in the previous case or with well water. The choice of one or more cooling sections in series, positioned differently in the sterilisation system, depends on technological and design choices without thereby limiting the present invention.

According to a further feature of the present invention, in the example shown, an intermediate aseptic pumping section, denoted as a whole by 25, is provided between the precooling heat exchanger or pre-refrigerator 22 and the final cooling heat exchanger 24.

More specifically, the pre-refrigerator 22 discharges the cube mixture with the conveying fluid, coming from the steriliser 20, directly into a storage bin comprising an intermediate tank 26 in which a pressurised aseptic environment is maintained, by feeding an inert gas, for example nitrogen from a tank 26A to preserve and maintain the sterile conditions which the tomato product has at the outlet of the steriliser. The bin 26 leads into a closed hopper 27 of a second aseptic pumping means 28 which constantly withdraw the mixture of cubed tomato and conveying fluid to feed it, through the second refrigeration section 24, towards an aseptic drainage device 29. In the drainage device 29 the conveying fluid is separated, from the cubed tomato maintaining aseptic conditions and fed into an aseptic storage tank 30. In the case wherein the conveying fluid is composed of tomato sauce, only partial drainage occurs since the remaining part is fed with the cubed tomato towards a packaging station 31 or towards a storage tank 32.

From what has been said and shown, with reference to the accompanying drawing, it is therefore understood that a new process and a new system have been provided for the sterilisation and packaging of chopped tomato pulp in a continuous process, whereby enzyme inhibition of the cubed tomato is initially achieved through preheating by means of the same conveying fluid, more particularly tomato sauce, which is added to the cubed tomato before the sterilisation phase. The initial preheating of the cubed tomato and of the conveying fluid moreover allows a considerable reduction in the thermal surfaces of the sterilisation exchanger with a consequent simplification of the system and reduction in the building and running costs. Likewise the use of icy water for the subsequent phases of cooling, similarly entails a reduction in the respective heat exchangers.

Finally, the provision of an intermediate pumping station between the sterilisation phase and the final cooling phase, performed in aseptic conditions, allows the pressures in the circuit to be reduced substantially, consequently reducing the causes of damage to the cell structure of the tomato normally due to the effect of the same thrust acting directly on the cubes. Tn other words, the use of a second section for pumping the cubed tomato, in combination with a storage bin in a position intermediate to the system, allows both operation in aseptic conditions, and in practice the halving of the maximum pressures applied in the system.

The intent therefore is that what has been said and shown with reference to the accompanying drawing has been given purely by way of an example of the innovative principles of the invention and that other modifications or variants may be made without thereby departing from what has been claimed.

## Claims

1. Method for the sterilisation and packaging of chopped tomato pulp (14) in which the tomato pulp is subjected to a sterilisation phase (20), subsequently performing a cooling phase in a continuous packaging line, before being fed to a final packaging station (31), characterised by mixing the chopped tomato pulp (14) with a quantity of a hot conveying fluid (15); preheating said chopped tomato pulp (14) by heat given by said hot conveying fluid (15) to bring it to an inactivation enzyme temperature, furtherly heating said preheated mixture of said tomato pulp and said conveying fluid to bring it to a second sterilisation temperature higher than the previous one, and subsequently causing a rapid cooling of the mixture (22), separating at least part of the excess of conveying fluid in respect to tomato pulp, before packaging (31).

2. Method for the sterilisation and continuous packaging of chopped tomato pulps (14), according to claim 1, characterised by mixing the chopped tomato pulp (14) with an excess quantity of hot conveying fluid by heat given by said hot conveying fluid (15) inside a mixing container (10) to bring it to an inactivation temperature; feeding the pre-heated mixture of tomato pulp and said conveying fluid in a heating path (20) to bring it to said sterilisation temperature, causing a rapid cooling of the mixture in a cooling path (24) before packaging (31).

3. Method according to claim 1, characterised by maintaining the mixture of tomato pulp and conveying fluid to said sterilisation temperature for a prefixed time after said heating path (20).

4. Method according to claim 2 in which said mixing container (10) comprises heat wall (11), characterised by furtherly preheating the cubed tomato and said conveying fluid by heat supply through the walls (11) of the mixing container (10).

5. Method according to claim 1, in which said conveying fluid is a food liquid comprising tomato sauce.

6. Method according to claim 2 characterised by pumping the mixture of cubed tomato and conveying fluid from said mixing container (10) to sterilisation heating path (20), and by performing a second pumping phace of the cubed tomato with the conveying fluid, in an intermediate position (28) between said sterilisation heating path (20) and said cooling path (22, 24).

7. Method according to claim 6, characterised in that said intermediate pumping phase is performed between a rapid precooling phase (22) and a final cooling phase (24).

8. Method according to the previous claims, characterised in that said rapid precooling phase (22) and said final cooling phase (24) are performed with icy water.

9. Method according to claim 8, characterised in that said icy cooling water has a temperature of between 0 and 5°C.

10. Method according to claim 1, characterised in that said preheating phase is performed by heating said cubed tomato and said conveying liquid to a enzyme inhibition temperature of the tomato, between 40 and 60°C.

11. Method according to claim 10, characterised in that the hot conveying fluid is mixed with the cubed tomato in a proportion of between 40 and 60% in weight of the final mixture, maintaining the conveying fluid at a temperature lower than 100°C.

12. A plant suitable for sterilisation and continuous packaging of chopped tomato pulp according to the method of claim 1, in which the chopped tomato pulp (14) and a conveying fluid (15) are fed in a mixing container (10) and in which the mixture of tomato pulp and conveying fluid is pumped (19) in a line comprising a heating and sterilising path (20) for the mixture and a cooling path (24) to bring the mixture to a final packaging temperature, characterised by comprising means (16) for feeding and heating the conveying fluid, as well as means (14) for feeding the tomato pulp into the mixing container in metered quantities to bring the mixture to an enzyme inactivation temperature; first pumping means to feed said mixture of tomato pulp and conveying fluid from the mixing container (10) through said heating path (20) to bring pre-heated mixture to a sterilisation temperature, and second aseptic pumping means (26, 27) provided between said sterilising path (20) and a cooling path (24) to bring said mixture to an end packaging temperature.

13. A plant according to claim 12, characterised by comprising precooling means (22) for the chopped tomato and the mixture, provided between said sterilisation path (20) and aseptic pumping means (28).

14. A plant according to claim 12, characterised in that said aseptic pumping means (28) comprises a first storing tank (26) for the mixture of chopped tomato and conveying fluid means (26A) for maintaining said storage container (26) in aseptic and pressurised conditions, as well as an aseptic pumping device (28) between said storage container (26) and the final cooling path (24).

15. A plant according to claim 12, characterised in that said container (10) comprises heating walls means (11) for mixing and preheating the chopped tomato.

16. A plan according to any one of the previous claims, characterised in that said precooling means (22) and/or said final cooling path (24) comprise means (23) for the circulation of refrigerated icy water.

17. A plant according to any one of the previous claims, further characterised by comprising, downstream of the final refrigerating path (24), aseptic drainage means (29) provided for separating at least part of the conveying fluid from the tomato mixture.
